# EUROPEAN PATENT SPECIFICATION

(11) **EP 4 494 930 B1**
(45) Date of publication and mention of the grant of the patent: **20.05.2026**
(21) Application number: 24189358.5
(22) Date of filing: 18.07.2024
(51) Int. Cl.: B60N 2/01, B60N 2/015, B60N 2/02, B60N 2/90

(54) **COCKPIT FOR A MOTOR VEHICLE AND METHOD FOR THE RECONFIGURATION OF A COCKPIT**
COCKPIT FÜR EIN KRAFTFAHRZEUG UND VERFAHREN ZUR REKONFIGURATION EINES COCKPITS
HABITACLE DE VÉHICULE AUTOMOBILE ET PROCÉDÉ DE RECONFIGURATION D'UN HABITACLE

(30) Priority: 20.07.2023 IT 202300015249
(43) Date of publication of application: 22.01.2025
(73) Proprietor: FERRARI S.p.A., 41100 Modena (IT)
(72) Inventor: CONIGLIARO, Vito, 41100 Modena (IT); DE PAOLI, Alessandro Paolo, 41100 Modena (IT); GRANJARD, Thomas, 41100 Modena (IT); TAYLOR, Daniel Martin, 41100 Modena (IT)
(74) Representative: Studio Torta S.p.A.

(56) References cited:
- FR-A1- 2 890 911
- FR-A1- 3 108 277

## Description

### CROSS-REFERENCE TO RELATED APPLICATIONS

This patent application claims priority from Italian patent application no. 102023000015249 filed on July 20, 2023.

### TECHNICAL FIELD

This invention relates to a cockpit for a motor vehicle and a method for reconfiguring the cockpit.

### BACKGROUND

Motor vehicles comprise, in a known way:
- a passenger compartment defining a body;
- multiple wheels;
- a steering wheel arranged inside the passenger compartment which can be driven by a driver to steer the front wheels and thus enable the motor vehicle to follow a curved trajectory; and
- pedals comprising an accelerator and a brake that the driver can activate to increase the drive torque or exert a braking torque on the wheels respectively, so as to control the speed of the motor vehicle.

The passenger compartments of motor vehicles normally intended for use on the road implement the so-called "two-seater" configuration.

In this "two-seater" configuration, the passenger compartment also comprises a pair of front seats intended to be occupied by a driver and a passenger respectively, and arranged next to each other along a transverse direction of the motor vehicle orthogonal to a longitudinal direction defining a normal forward direction of the motor vehicle.

The steering wheel and the pedals are located opposite the driver's seat and are basically arranged in a left or right front corner of the vehicle.

With particular reference to sports motor vehicles, passenger compartments are known that implement the so-called "single-seater" configuration.

In this "single-seater" configuration, the passenger compartment comprises a single front seat arranged in a central position opposite the steering wheel and the pedals or passenger seats arranged to the side and/or set back from the central seat.

There is a need in the sector to provide motor vehicles that enable simple and easy reconfiguration between the above-mentioned "single-seater" and "two-seater" configurations. Document FR3108277A1 discloses a known seating system.

### SUMMARY

The purpose of this invention is to produce a cockpit, which makes it possible to meet the need mentioned above.

The above-mentioned purpose is achieved with this invention, as it relates to a cockpit according to what is defined in claim 1.

This invention also relates to a method for reconfiguring a cockpit according to what is defined in claim 10.

### BRIEF DESCRIPTION OF THE DRAWINGS

In order to better understand this invention, two nonlimiting preferred embodiments thereof will now be described by way of example with reference to the accompanying drawings, in which:
- Figure 1 is a perspective view of a motor vehicle comprising a first embodiment of a cockpit produced according to the precepts of this invention with parts removed for clarity;
- Figure 2 is a perspective view on a very enlarged scale of the first embodiment of the cockpit in Figure 1, with parts removed for clarity and, in a first, "single-seater" operating configuration;
- Figure 3 is a perspective view on a very enlarged scale of the first embodiment of the cockpit in Figure 1, with parts removed for clarity and, in a second, "two-seater" operating configuration;
- Figure 4 is a perspective view on a very enlarged scale of a second embodiment of the cockpit in Figures 1 to 3, with parts removed for clarity and in a first, "single-seater" operating configuration;
- Figure 5 is a perspective view on a very enlarged scale of the second embodiment of the cockpit in Figure 5, with parts removed for clarity and in a first, "two-seater" operating configuration;
- Figure 6 is a perspective view from below on a very enlarged scale of the cockpit in Figures 4 and 5;
- Figure 7 is a rear view of the cockpit in Figure 6;
- Figure 8 illustrates, on an even more enlarged scale and in perspective view according to a first visual angle, a seat of the cockpit in Figures 6 and 7;
- Figure 9 illustrates the seat in Figure 8 in a side view;
- Figures 10 to 12 illustrate, in a very enlarged perspective view, respective first details of the seat in Figures 8 and 9; and
- Figures 13 to 15 illustrate, in a very enlarged perspective view, second details of the seat in Figures 8 and 9.

### DESCRIPTION OF EMBODIMENTS

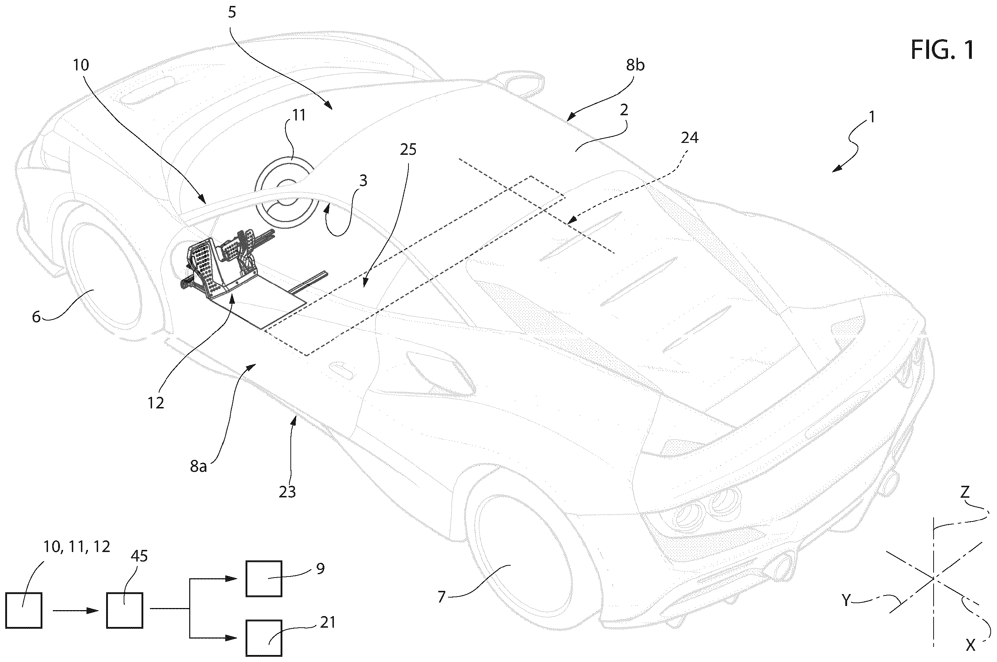

With reference to Figure 1, reference number 1 indicates a motor vehicle comprising a body 2 defining a passenger compartment 3.

It should be specified that, below in this description, expressions such as "above", "below", "in front of", "behind" and the like are used with reference to the normal movement of the motor vehicle 1.

It is also possible to define:
- a longitudinal axis X integral with the motor vehicle 1, arranged, in use, horizontal and parallel to a normal forward moving direction of the motor vehicle 1;
- a transversal axis Y integral with the motor vehicle 1, arranged, in use, horizontal and orthogonal to the axis X; and
- an axis Z integral with the motor vehicle 1, arranged, in use, vertical and orthogonal to the axes X, Y.

The motor vehicle 1 also comprises (Figure 1):
- a pair of front wheels 6 and a pair of back wheels 7;
- a known engine 9 only schematically illustrated in Figure 1 and operationally connected to the wheels 6 and/or 7 to exert drive torque on the wheels 6 and/or 7; and
- a brake system 21, also only schematically illustrated, in Figure 1 that can be driven to exert a braking torque on the wheels 6, 7.

The motor vehicle 1 also comprises (Figure 1):
- a windscreen 5 delimiting the passenger compartment 3 at the front; and
- a pair of doors 8a, 8b hinged to the body 2 that can be moved between a closed position wherein they delimit the passenger compartment 3 to the side and prevent entry into/exit from the passenger compartment 3 and an open position wherein they enable entry into/exit from the passenger compartment 3.

The body 2 also comprises a pair of door sills 23, 24 with longitudinal ends opposite each other. The door sills 23, 24 delimit the passenger compartment 3 and are adjacent to corresponding doors 8a, 8b when the doors 8a, 8b are in the respective closed positions.

The motor vehicle 1 also comprises control members 10 arranged in the passenger compartment 2 that the driver can activate to set a forward trajectory of the motor vehicle 1 with a desired speed.

In a known way, the control members 10 comprise:
- a steering wheel 11 arranged inside the passenger compartment 2 that the driver can activate; and
- pedals 12 also arranged inside the passenger compartment 2 that the driver can activate.

The control members 10 are connected to the engine 9, to the brake system 21, and to the wheels 6 and/or 7 implementing a technology known in the sector as "drive by wire".

In this description, the term "drive by wire" mode means that the steering wheel 11 does not have physical or mechanical connections with the wheels 6, 7.

The motor vehicle 1 also comprises a control unit 45 (Figure 1) programmed to receive, as input, the actions requested at the steering wheel 11 and pedals 12, and to generate, as output, control signals for the engine 9 and the brake system 21.

The passenger compartment 3 houses a front cockpit 25, only schematically illustrated in Figure 1, in a known way.

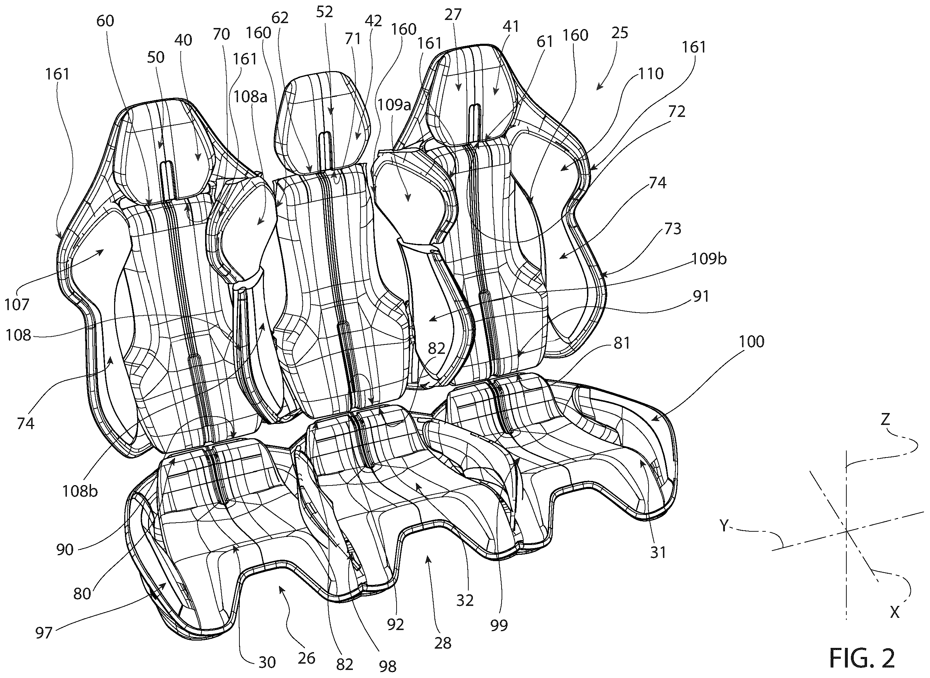

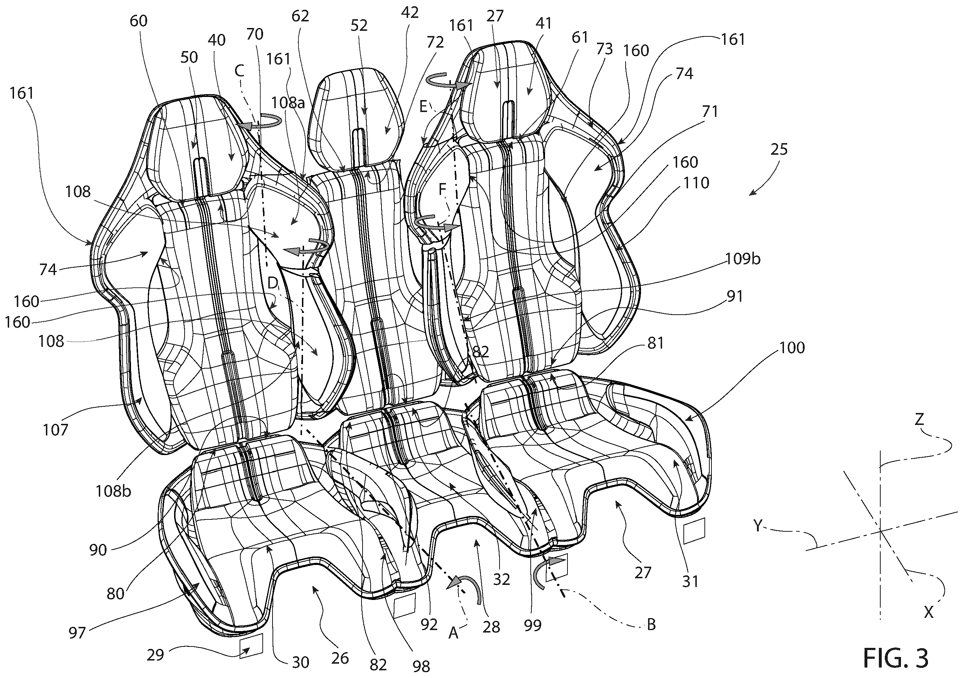

The cockpit 25 can be selectively moved between:
- a first, "single-seater" configuration illustrated in Figure 2, wherein it defines a seat 26 for a passenger and a seat 27 for a driver arranged next to each other and spaced apart along their axis Y; and
- a "two-seater" configuration illustrated in Figure 3, wherein it defines a single seat 28 for the driver.

With particular reference to Figures 2 and 3, the cockpit 25 comprises:
- a frame 29 fixed to the body 2;
- multiple, three in the example illustrated, seat cushions 30, 31, 32 placed next to each other along the axis Y;
- multiple, three in the example illustrated, backrests 40, 41, 42 placed next to each other along the axis Y; and
- multiple, three in the example illustrated, headrests 50, 51, 52 placed next to each other along the axis Y.

Each seat cushion 30, 31, 32 is connected with a corresponding backrest 40, 41, 42 and a corresponding headrest 50, 51, 52.

Each backrest 40, 41, 42 comprises, in particular:
- a corresponding upper edge 60, 61, 62 extended along the axis Y and connected to a lower edge 70, 71, 72 of the corresponding headrest 50, 51, 52; and
- a corresponding lower edge 80, 81, 82 extended along the axis Y and connected to a rear and upper edge 90, 91, 92 of the corresponding seat cushion 30, 31, 32.

The cockpit 25 also comprises:
- multiple sides 97, 98; 99, 100; and
- multiple sides 107, 109; 109, 110 arranged above the corresponding sides 97, 98; 99, 100.

Each seat cushion 30, 31 extends between a corresponding pair of sides 97, 98; 99, 100.

The sides 97, 98; 99, 100 are, in particular, arranged on corresponding opposite sides of the corresponding seat cushion 30, 31.

The sides, 98, 99 are also arranged on corresponding sides of the seat cushion 32.

The seat cushion 32 is placed between the seat cushions 30, 31 along the axis Y.

Similarly, each backrest 40, 41 extends between a corresponding pair of sides 107, 108; 109, 110.

The sides 107, 108; 109, 110 are, in particular, arranged on corresponding opposite sides of the corresponding backrest 40; 41.

The sides 108; 109 are also arranged on corresponding opposite sides of the backrest 42.

In particular, each side 97, 98; 99, 100; 107, 108; 109, 110 comprises:
- a corresponding edge 160 fixed to the corresponding seat cushion 30; 31; backrest 40; 41; and
- a corresponding free edge 161 opposite the corresponding edge 160.

The backrest 42 is interposed between the backrests 40, 41 along the axis Y.

Each backrest 40, 41, 42 is placed between a corresponding seat cushion 30, 31, 32 and a corresponding headrest 50, 51, 52.

In the example illustrated, the sides 108, 109 are each made of two corresponding, upper and lower half-sides 108a, 108b; 109a, 109b.

In the first, "two-seater" configuration, the seat 26 comprises the seat cushion 30, the backrest 40, and the headrest 50.

The seat 27 comprises the seat cushion 31, the backrest 41, and the headrest 51.

In the example illustrated in Figures 2 and 3, the sides 107, 108; 109, 110 each comprise a support 73 and a cushion 74 supported by the support 70.

Advantageously, the cockpit 25 can be moved into a second, "single-seater" configuration wherein it defines just the seat 28 for the driver formed by the seat cushion 32, the backrest 42, the sides 98, 99, 108, 109; the sides 98, 99; 108, 109 diverge from each other in the "single-seater" configuration, moving from the respective edges 160 towards the corresponding edges 161; the sides 98, 108 are placed between the seats 26, 28 and the sides 99, 109 are placed between the seats 28, 27.

The seat 28 also comprises the headrest 52.

More specifically, the sides 97, 107 are respectively fixed to the seat cushion 30 and to the backrest 40.

The sides 100, 110 are respectively fixed to the seat cushion 31 and to the backrest 41.

The side 97, 107 and the side 100, 110 diverge from each other, moving from the corresponding edge 160 towards the corresponding edge 161.

The side 100 and the side 110 extend at the front of the corresponding seat cushion 40 and backrest 41, moving from the corresponding edge 160 towards the corresponding edge 161.

The transition of the cockpit 25 from the first to the second configuration and vice versa occurs thanks to:
- the rotation of the sides 98, 99 in relation to the corresponding seat cushions 30, 31 and around the respective axes A, B; and
- the rotation of the half-sides 108a, 108b; 109a, 109b in relation to the corresponding backrests 40, 41 and around the respective axes C, D; E, F.

The transition of the cockpit 25 from the first to the second configuration, and vice versa, also occurs manually or by driving an actuator (not illustrated).

The sides 98, 99 are assembled so that they can rotate in relation to the corresponding seat cushions 30, 31 around the corresponding axes A, B between:
- respective first positions assumed when the cockpit 25 is in the first, "two-seater" configuration; and
- respective second positions assumed when the cockpit 25 is in the second, "single-seater" configuration.

Similarly, the half-sides 108a, 108b, 109a, 109b are assembled so that they can rotate in relation to the corresponding backrests 40, 41 and around corresponding axes C, D, E, F between:
- respective third positions assumed when the cockpit 25 is in the first, "two-seater" configuration; and
- respective fourth positions assumed when the cockpit 25 is in the second, "single-seater" configuration.

More precisely, in the respective first positions, the sides 97, 98; 99, 100; 107, 108; 109, 110 are arranged so that they diverge from each other, moving from the respective edges 160 towards the corresponding edges 161.

The sides 98, 99 also converge at the front of the seat cushion 32, moving from the respective edges 160 towards the corresponding edges 161.

Similarly, the sides 108, 109 also converge at the front of the backrest 42, moving from the respective edges 160 towards the corresponding edges 161.

In the corresponding second positions, the sides 97, 98; 99, 10) are arranged parallel to each other.

The sides 98, 99 also diverge at the front of the seat cushion 32, moving from the respective edges 160 towards the corresponding edges 161.

Similarly, the sides 107, 108 (109, 110) are arranged parallel to each other.

The sides 108, 109 also diverge at the front of the backrest 42, moving from the corresponding edges 160 towards the corresponding edges 161.

The seat 26 is arranged next to the door sill 23 and the other seat 27 is arranged next to the other door sill 24, thus implementing a left-hand drive mode in the motor vehicle 1 in the first, "two-seater" configuration of the cockpit 25.

The seat 28 is arranged in a mid position between the door sills 23, 24.

In a way not described in detail since not necessary for this invention, the pedals 12 and the steering wheel 11 can be moved along the axis Y to encourage the transformation of the motor vehicle 1 between the first and second configuration.

In particular, the pedals 12 and the steering wheel 11 may be moved parallel to the axis Y between:
- a fifth position (Figure 1) assumed when the cockpit 25 is in the first, "two-seater" configuration and wherein they face the seat 27 defined by the cockpit 25; and
- a sixth position assumed when the cockpit 25 is in the second, "single-seater" configuration and wherein they face the seat 28 defined by the cockpit 25.

The pedals 12 and the steering wheel 11 are arranged adjacent to the door sill 23 when they are arranged in the fifth position. In this fifth position, a first distance between the pedals 12 and the steering wheel 11, and the door sill 23 is less than a second distance between the pedals 12 and the steering wheel 11, and the door sill 24. The above-mentioned first and second distance are measured along the axis Y.

The pedals 12 and the steering wheel 11 are arranged in a position midway between the door sills 23, 24 when they are arranged in the sixth position. In this sixth position, the pedals 12 and the steering wheel 11 are equally spaced apart form the door sills 23, 24 along the axis Y.

During operation of the cockpit 25 and the motor vehicle, the passenger compartment 3 is in the first, "two-seater" configuration.

In this first, "two-seater" configuration, the cockpit 25 defines the seats 27, 26 for the driver and passenger respectively.

The seats 26, 27 are separated parallel to the axis Y by the seat cushion 32 and the backrest 42.

More specifically, the seat 26 is delimited by the sides 97, 107 and by the sides 98, 108 arranged in the respective first and third positions.

The seat 27 is delimited by the sides 99, 100 and by the sides 109, 110 arranged in the respective first and third positions.

Therefore, the sides 97, 98; 99; 100; 107, 108; 109, 110 are arranged so that they diverge from each other, moving from the respective edges 160 to the corresponding edges 161 so as to enable easy access for the driver and passenger to the respective seats 27, 26.

The sides 98, 99; 108, 109 are arranged so that they converge with each other, moving from the respective edges 160 to the corresponding edges 161.

The pedals 11 and the steering wheel 12 are arranged in the fifth position, wherein they face the seat 27 along the axis X, to enable the driver to guide them.

If one wishes to reconfigure the motor vehicle 1, so as to arrange the cockpit 25 in the second, "single-seater" configuration, it is enough to drive the actuator so as to cause:
- the rotation of the sides 98, 99 in relation to the corresponding seat cushions 30, 31 and around the corresponding axes A, B starting from the respective first positions until reaching the corresponding second positions; and
- the rotation of the half-sides 108a, 108b; 109a, 109b in relation to the corresponding backrests 40, 41 and around the corresponding axes C, D; E, F starting from the respective third positions until reaching the corresponding fourth positions.

With reference to Figure 3, the cockpit 25 in the second, "single-seater" configuration defines just one seat 28 for the driver.

More specifically, the seat 28 is delimited by the sides 98, 108 and by the other sides 99, 109 arranged in the respective second and fourth positions.

Therefore, the sides 97, 98; 107, 108; 99, 100; 109, 110 are arranged parallel to each other and extend from respective opposite sides of the seat 28, moving from the respective edges 160 to the corresponding edges 161.

The sides 98, 99; 108, 109 diverge in front of the seat 28, moving from the respective edges 160 to the corresponding edges 161 so as to enable easy access for the driver and passenger to the seat 28.

The pedals 11 and the steering wheel 12 are also moved parallel to the axis Y, in a known way not illustrated, from the fifth position to the sixth position, wherein they face the seat 27 along the axis X, to enable the driver to guide them.

Irrespective of the fact that the cockpit 25 is in the first, "two-seater" configuration, or in the second, "single-seater" configuration, the control members 10 control the engine 9, the wheels 6, 7, and the brake system 21 implementing a technology known in the sector as "drive by wire".

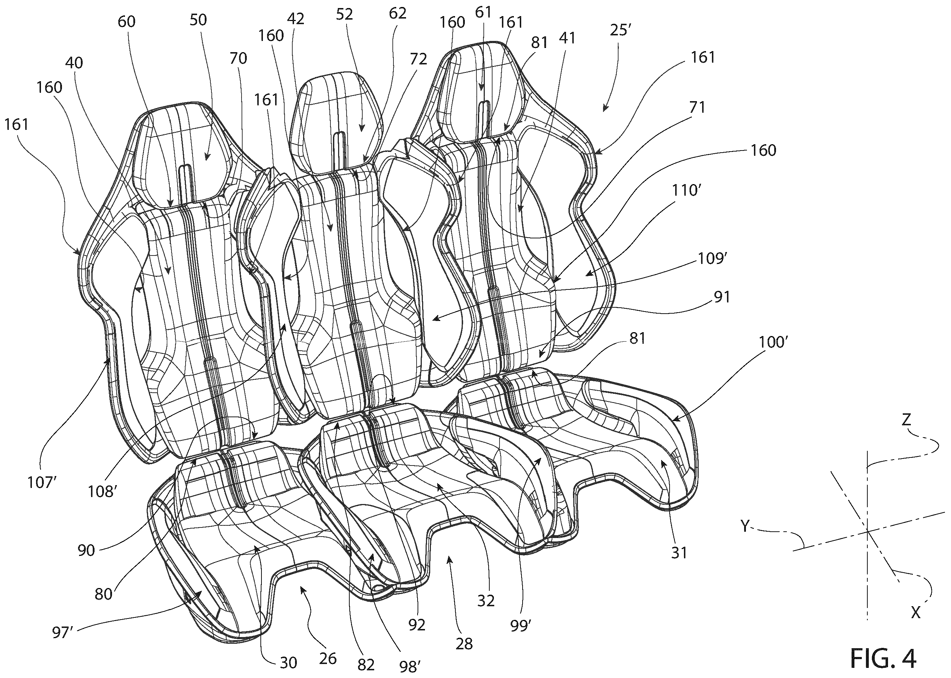

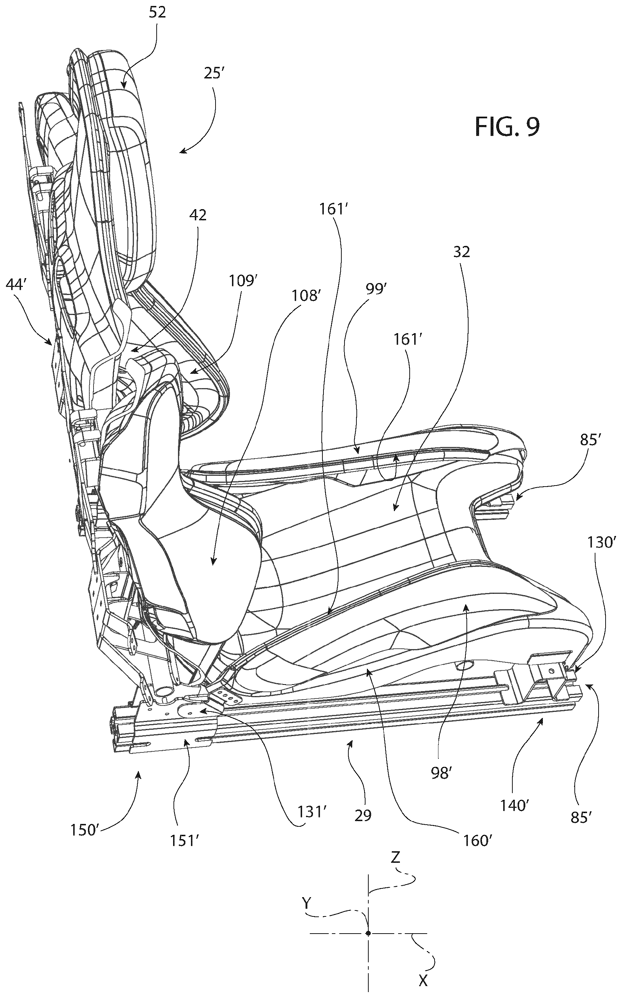

With reference to Figures 4 to 15, reference number 25' indicates a cockpit according to a second embodiment of this invention.

The cockpit 25' is similar to the first cockpit 25 and will be described below only as far as it differs from the latter; the same or equivalent parts of the systems 10, 10' will be distinguished, where possible, by the same reference numbers.

The cockpit 25' differs from the first cockpit 25, in that:
- the sides 98', 99', 108', 109' are connected to the frame 29' so that they can be released;
- the sides 98', 99', 108', 109' cannot rotate in relation to the frame 29', once they have been connected to the frame 29'; and
- the sides 108', 109' are each made of a single element.

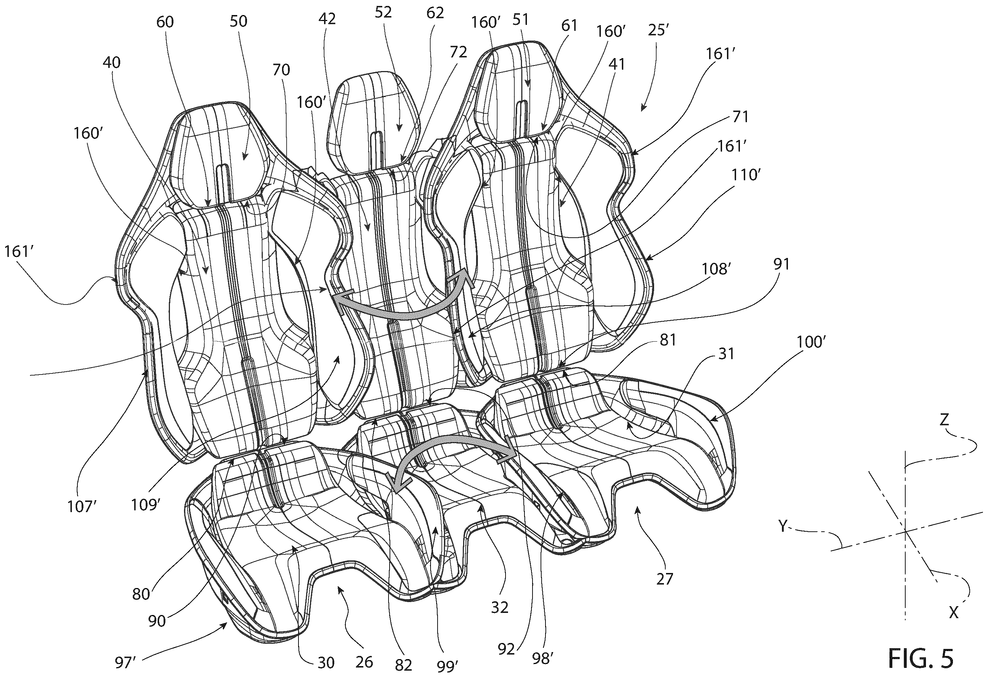

More specifically, in the first, "two-seater" configuration of the cockpit 25' (Figure 5), the sides 98', 108' are arranged on a first side of the seat cushion 32 and the sides 99', 109' are arranged on a second side, opposite the first side along the axis Y, of the seat cushion 32.

The sides 98', 99' and 108', 109' also converge, moving from the corresponding edges 160' towards the corresponding edges 161'.

In the example illustrated, the first side is arranged on the side of the door sill 23 and the second side of the seat cushion 32 is arranged on the side of the door sill 24.

In the second, "single-seater" configuration of the cockpit 25' (Figure 4), the sides 98', 108' are arranged on the second side of the seat cushion 32 and the sides 99', 109' are arranged on the first side.

The sides 99', 98' and 109', 108' also diverge, moving from the corresponding edges 160' towards the corresponding edges 161'.

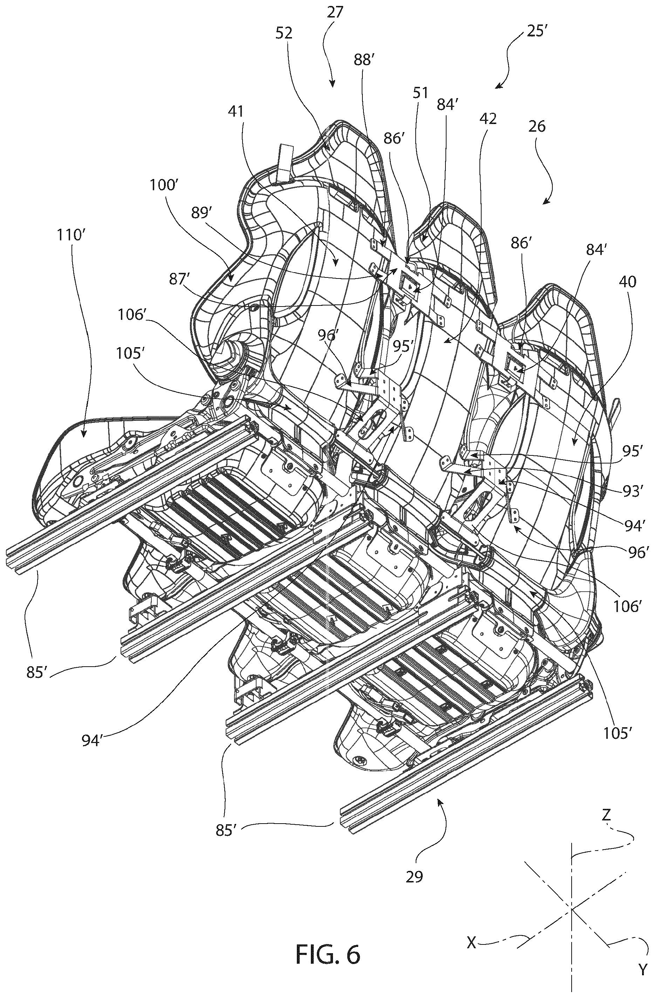

With reference to Figures 6 to 9 and 13 to 15, the frame 29' comprises, in turn, multiple, four in the example illustrated, guides 85' parallel to the axis X, spaced apart along the axis Y and arranged on the respective sides 97', 98', 99', 100' and on which the cockpit 25' can slide.

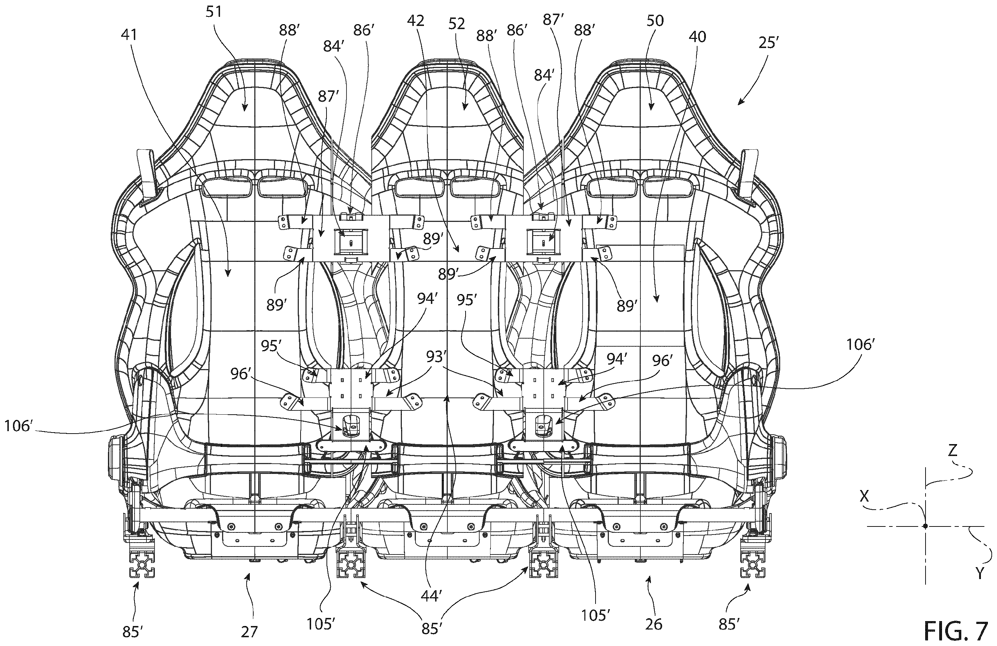

The cockpit 25' also comprises (Figures 6 and 7):
- a pair of upper brackets 86', one of which connects the backrests 40, 42 to each other and the other of which connects the other backrests 41, 42 to each other; and
- a pair of lower brackets 93', one of which connects the backrests 40, 42 to each other and the other of which connects the other backrests 41, 42 to each other.

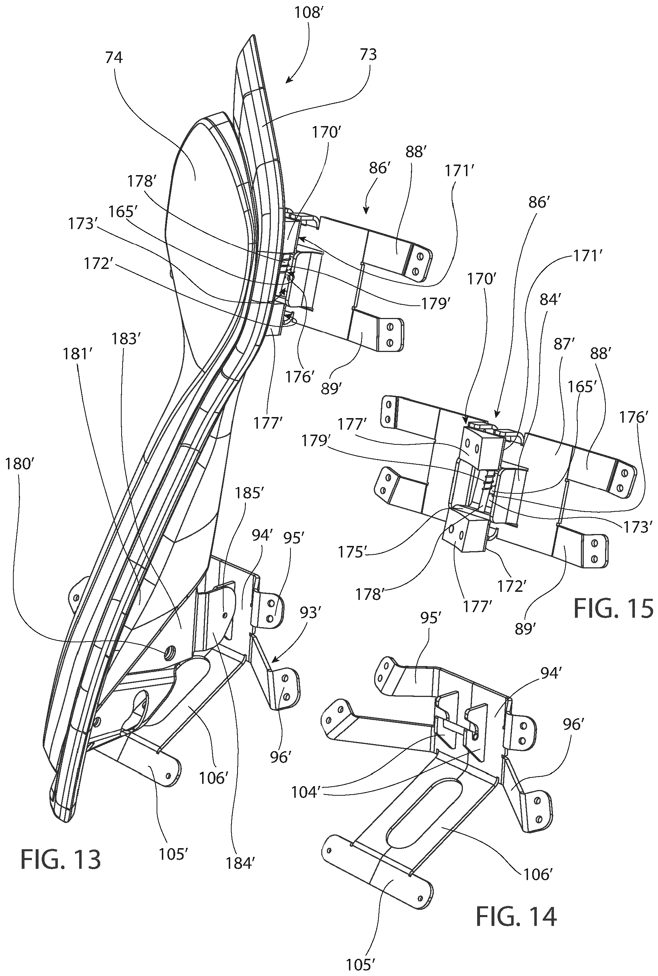

Each bracket 86' comprises, in turn (Figures 13 and 15):
- a plate 87' defining a square opening 84';
   - a pair of upper appendages 88', projecting so they overhang from the respective opposite sides of the plate 87' and defining respective attachment elements fixed to respective rear surfaces 44' of the backrests 40, 42 (42, 41); and
- a pair of lower appendages 89', projecting so they overhang from respective opposite sides of the plate 87' and defining respective attachment elements also fixed to respective rear surfaces 44' of the backrests 40, 42 (42, 41).

The appendages 88', 89 are extended parallel to the axis Y.

Each bracket 93' comprises, in turn (Figures 13 and 14):
- a plate 94' defining a pair of seats 104' spaced apart along the axis Y, open above and closed below in the direction parallel to the axis Z, and having a C-shaped cross-section on a plane orthogonal to the axis Y;
- a pair of upper appendages 95', projecting so they overhang from respective opposite sides of the plate 94' and defining respective attachment elements fixed to respective rear surfaces 44' of the backrests 40, 42 (42, 41);
- a pair of lower appendages 96', projecting so they overhang from the respective opposite sides of the plate 94' and defining respective attachment elements also fixed to respective rear surfaces 44' of the backrests 40, 42 (42, 41); and
- a bar 105' defining a pair of additional attachment elements fixed to the lower surfaces 44' of the backrests 40, 42 (42, 41).

The seats 104' are placed between the appendages 95', 96 parallel to the axis Z.

Each bracket 93' also comprises a plate 106' tilted in relation to the plate 94' and interposed between the bar 105' and the appendages 96'.

The appendages 95', 96' and the bar 105' are extended parallel to the axis Y.

With reference to Figures 4 and 5 and 10 to 12, each side 98', 99' is connected so that it can be released to the corresponding guide 85'.

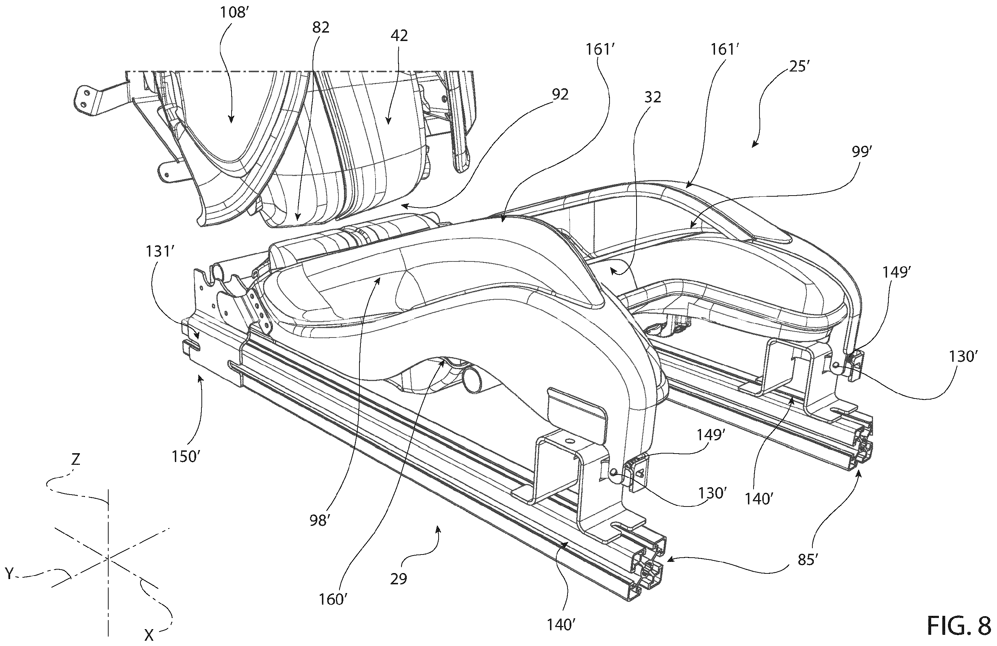

More specifically, each side 98', 99' comprises, in turn (Figures 8 to 12):
- a front hole 130' that can be coupled, so that it can be released, to a front bracket 140' supported by a corresponding guide 85'; and
- a rear attachment element 131' that can be coupled, so that it can be released, to a rear bracket 150' supported by a corresponding guide 85'.

Below in this description, only one side 98', 99', one bracket 140', and one other bracket 150' are described, the sides 98', 99' and the brackets 140', 150' being identical to each other.

More specifically, the hole 130' and the attachment element 131' define respective front and rear ends of the side 98', 99' and are spaced apart from each other parallel to the axis X, when the side 98', 99' is connected to the guide 85'.

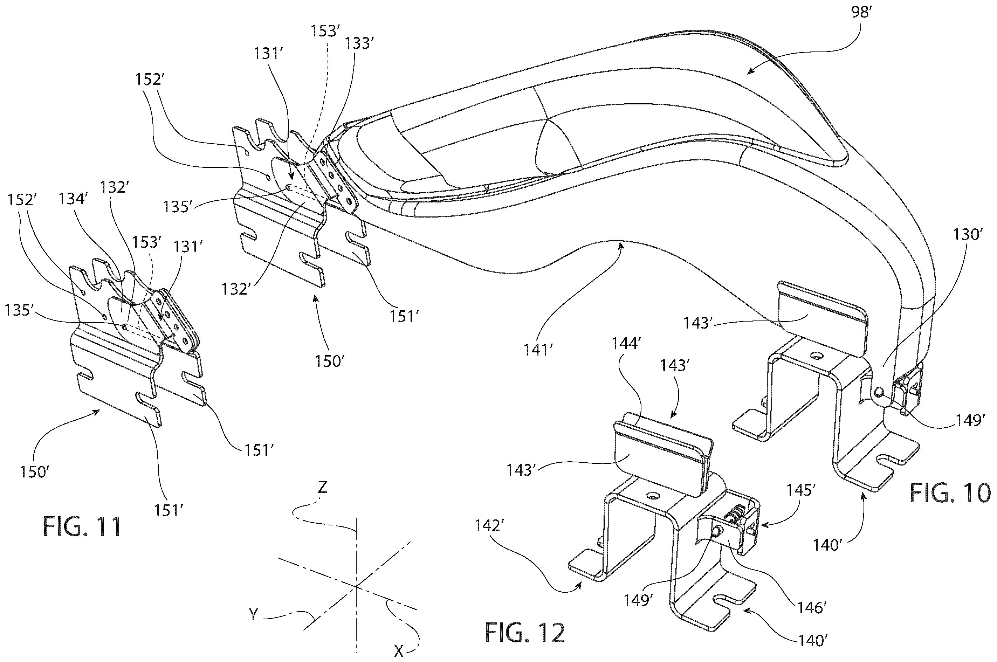

The bracket 140' comprises, more precisely (Figure 12):
- a support structure 142' fixed to the guide 85';
- a pair of walls 143' parallel to each other, arranged above the support structure 142', and defining a seat 144' extending along the axis X and open along the axis Z on the opposite side to the support structure 142'; and
- a pair of walls 145', 146' projecting from the support structure 142' and connected to each other at the front of the seat 144' via a pin 149' with an axis parallel to the axis Y.

The wall 146' is bent towards the wall 145' in front of the pin 149'.

The pin 149' projects from the wall 145' and engages the hole 130' of the corresponding side 98', 99' when the latter is connected to the guide 85'.

The seat 144' is engaged by a portion 141' of the corresponding side 98', 99' when the latter is connected to the guide 85'.

In particular, the walls 143' project from the support structure 142' on the side opposite the relative guide 85' with reference to the axis Z.

The attachment element 131' comprises, in turn, a pair of walls 132' (just one of which is visible in Figures 10 and 11) parallel and spaced apart, and having respective front ends 133' fixed to the side 98', 99' and respective rear ends 134' connected by a pin 135' parallel to the axis Y.

The bracket 150' comprises, in turn:
- a pair of walls 151' parallel to each other, spaced apart parallel to the axis Y and between which the guide 85' extends; and
- a pair of pins 152' (only schematically illustrated in Figures 10 and 11), spaced apart along the axes Z, X and parallel to the axis Y, and placed between the walls 151' so as to connect the walls 151', keeping them at a desired distance parallel to the axis Y.

The walls 151' define respective seats 153' open at the front and closed at the rear, extended along the axis Y and engaged by the pin 135' of the attachment element 131'.

The brackets 140', 150' of each guide 85' are spaced apart along the axis X.

With reference to Figures 4 and 5 and 13 to 15, each side 108', 109' is connected to a corresponding bracket 86' and a corresponding bracket 93 so that it can be released.

More specifically, each side 108', 109' comprises, in turn (Figures 13 to 15):
- a corresponding attachment element 170' that can be coupled, so that it can be released, to a corresponding bracket 86' and arranged above when the side 108', 109' is connected to the backrest 42; and
- a corresponding attachment element 180' that can be coupled, so that it can be released, to a corresponding bracket 93' and arranged below when the side 108', 109' is connected to the backrest 42.

Below in this description, only one side 108', 109', one attachment element 170', one other attachment element 180', one bracket 86', and one other bracket 93' are described, the sides 108', 109', the attachment elements 170', 180', and the brackets 86', 93' being identical to each other.

More specifically, the attachment element 170' and the attachment element 180' define respective upper and lower ends of the side 108', 109' and are spaced apart from each other parallel to the axis Z, when the side 98', 99' is connected to the backrest 42.

The attachment element 170' comprises, in turn:
- a pair of walls 171', 172', respectively upper and lower;
- a wall 173' placed between the walls 171', 172' and arranged at the rear of the walls 171', 172' and engaging the opening 84' of the plate 87' when the side 108', 109' is connected to the bracket 86'; and
- a pair of walls 174', 175' parallel to and spaced apart from each other, that lie orthogonal to the axis Z, and extend one (174') between the walls 171', 173' and the other (175') between the walls 172', 173'.

The attachment element 170' also comprises:
- a pair of interfaces 177' connected to the side 108', 109' and fixed to respective walls 171', 172';
- a pin 178' that crosses the walls 174', 175' orthogonally;
- a spring 179' placed between the pin 178' and the wall 174'; and
- an appendage 165' projecting so that it overhangs orthogonally to and to the rear of the pin 178' and can engage, in a sliding manner, a seat 176' defined by the wall 173' and extending parallel to the pin 178'.

The attachment element 180' comprises, in turn, a wall 181' having respective first portions 183' (only one of which is illustrated in Figure 13) overlapping each other and connected to the side 108', 109' and respective second portions 184' (only one of which is illustrated in Figure 13) spaced apart from each other and connected orthogonally by a pin 185'.

The pin 185' engages the seats 104' of the bracket 93' and is arranged parallel to the axis Z, when the side 108', 109' is connected to the backrest 42.

The operation of the cockpit 25' is similar to that of the first cockpit 25 and is only described as far as it differs from this.

The operation of the cockpit 25' differs from the first cockpit 25 in that the transition from the first, "two-seater" configuration to the second, "single-seater" configuration occurs by removing the sides 98', 99', and 108', 109' from the cockpit 25' and connecting them again, in the reverse position, to the cockpit 25'.

More specifically, in the first, "two-seater" configuration, the side 98' is placed between the seat cushions 30, 32, the side 99' is placed between the seat cushions 32, 31, the side 108' is placed between the backrests 40, 42, and the side 109' is placed between the backrests 42, 41.

If one wishes to reconfigure the motor vehicle 1, so as to arrange the cockpit 25' in the second, "single-seater" configuration, it is enough:
- to decouple the holes 130' from the respective brackets 140' and the attachment elements 131' from the respective brackets 150', so as to remove the sides 98', 99' from the corresponding guides 85';
- to decouple the attachment elements 170' from the respective brackets 86' and the attachment elements 171' from the respective brackets 93', so as to remove the sides 108', 109' from the cockpit 25'; and
- to arrange the side 99' placed between the seat cushions 30, 32, the side 98' placed between the seat cushions 32, 31, the side 109' placed between the backrests 40, 42, and the side 108' placed between the backrests 42, 41 along the axis Y.

More precisely, the sides 99', 98' are first brought near the respective guides 85' in a position respectively interposed between the seat cushions 30, 32, and 32, 31.

Following this, the pins 135' of the attachment elements 131' are inserted so that they can slide parallel to the axis Y inside the seats 153' of corresponding brackets 150', keeping the sides 98', 99' tilted downwards moving from the respective front holes 130' towards the respective rear attachment elements 131'.

Once the pins 135' have reached the respective end-stroke positions inside the seats 153', the sides 98', 99' are rotated before bringing the holes 130' near to the corresponding brackets 140' and, following this, engaging the pins 149' of the brackets 140' inside the holes 130'.

At this point, the sides 98', 99' are fixed to the corresponding guides 85'.

The sides 108', 109' are first brought near the brackets 86', 93 in a position respectively interposed between the backrests 40, 42 and 42, 41.

Following this, the pins 185' of the attachment elements 180' are inserted inside the seats 104' of the brackets 93' and pushed below parallel to the axis Z until they reach respective end-stroke positions.

At this point, the sides 108', 109' are rotated so as to bring the attachment elements 170' near the corresponding brackets 86' and to insert the walls 173' inside the openings 84' of the plate 87' of the corresponding brackets 86'.

The elastic action exerted by the spring 179' on the pins 178' pushes the respective appendages 165' towards the lower ends of the corresponding seats 176', elastically keeping the walls 173' inside the openings 84'.

Upon reaching the second, "single-seater" configuration, the sides 98', 99' and 108', 109' also diverge, moving from the respective edges 160' towards the corresponding edges 161'.

The advantages enabled by this invention will be apparent from an examination thereof.

More specifically, the cockpit 25, 25' can be moved between the first, "two-seater" configuration wherein it defines the seat 27 for the driver and the seat 26 for the passenger, and the second, "single-seater" configuration wherein it defines just the seat 28 for the driver, simply by acting on the sides 98, 99; 98', 99'; 108, 109; 108', 109' .

In this way, the motor vehicle 1 can be quickly and simply made more suitable for road use when the cockpit 25, 25' assumes the first, "two-seater" configuration or for sports use wherein the cockpit 25, 25' assumes the second, "single-seater" configuration.

The cockpit 25 can be moved between the above-mentioned first, "two-seater" configuration and a second, "single-seater" configuration, simply by rotating the sides 99; 98', 99'; 108, 109; 108', 109' around the corresponding edges 160.

The cockpit 25' can be moved between the above-mentioned first, "two-seater" configuration and a second, "single-seater" configuration, simply by exchanging the sides 98, 99; 98', 99'; 108, 109; 108', 109'.

The sides 98', 99'; 108', 109' are connected, so that they can be released, to the guides 85' and to the brackets 86', 93', already normally present in a conventional frame, thus not requiring changes to the design of the frame 29'.

Finally, it is clear that changes may be made to the cockpit 25', 25' and to the reconfiguration method implemented according to this invention, and variations produced thereto that, in any case, do not depart from the scope of protection defined by the claims.

In particular, in the first, "two-seater" configuration, the seat 27 for the driver could be arranged facing the door sill 24 and the seat 26 for the passenger could be arranged facing the door sill 23, thus implementing a right-hand drive mode in the motor vehicle 1.

## Claims

1. A cockpit (25, 25') for a motor vehicle (1), comprising:
- a frame (29, 29'), which can be fixed to said motor vehicle (1);
- a first and a second seat cushion (30, 31);
- a first and a second backrest (40, 41); and
- a first side (98, 99; 108, 109) and a second side (98', 99'; 108', 109');
said cockpit (25, 25') being available in a a first configuration, wherein:
said first seat cushion (30), said first backrest and said first side (98, 108; 99'; 108') define a first seat (26) for one of a passenger and a driver; and
said second seat cushion (31), said second backrest (41) and said second side (99, 109; 99', 109') define a second seat (27) for the other one of said passenger and said driver;
said first and second seats (26, 27) being spaced apart from one another;
said first side (98, 108; 99'; 108') delimiting said first seat (26) on the side of said second seat (27) in said first configuration;
said second side (98, 108; 99'; 108') delimiting said second seat (27) on the side of said first seat (26) in said first configuration;
said first side (98, 108; 99', 108') and said second side (99, 109; 99', 109') each comprising a respective first edge (160, 160'), which is constrained to said cockpit (25, 25'), and a respective second edge (161, 161'), which is opposite the respective first edge (160, 160') and is free;
said first side (98, 108; 99', 108') and said second side (99, 109; 99', 109') converging towards one another in said first configuration of said cockpit (25, 25'), moving from the respective first edges (160, 160') to the corresponding second edges (161, 161');
**characterized in that** it comprises:
- a third seat cushion (32) interposed between said first and second seat cushions (30, 31);
- a third backrest (42) at least partly interposed between said first and second backrests (40, 41);
said cockpit (25, 25') being movable to a second configuration, wherein said third seat cushion (32), said third backrest (42) and said first side (98, 108; 99', 108') and second side (99, 109; 99', 109') define one single third seat (28) for a driver;
said first side (98, 108; 99', 108') and said second side (99, 109; 99', 109') being interposed between said first seat (30) and said third seat (32) and between said third seat (32) and said second seat (31), respectively;
said first side (98, 108; 99', 108') and said second side (99, 109; 99', 109') diverging from one another in said second configuration of said cockpit (25, 25'), moving from the respective first edges (160, 160') to the corresponding second edges (161, 161').

2. The cockpit according to claim 1, **characterized in that** said first and second sides (98, 108; 99, 109) can rotate relative to the respective first and second seat cushions (30, 31) or said first and second backrests (40, 41) can rotate between a first and a second position assumed when said cockpit (25) is in said first and second configuration, respectively.

3. The cockpit according to claim 2, **characterized in that** said first and second sides (108, 109) can rotate relative to the respective first and second backrests (40, 41);
each one of said first and second sides (108, 109) comprising, in turn:
- a respective first half-side (108a, 109a), which can rotate around a first axis (C, D); and
- a respective second half-side (108b, 109b), which can rotate around a respective second axis (E, F).

4. The cockpit according to claim 1, **characterized in that** said first side (98'; 108') and said second side (99'; 109') are connected to said frame (29') in a releasable manner;
said first side (99'; 108') delimiting said second seat (26) on the side of said first seat (27) in said second configuration;
said second side (99'; 108') delimiting said first seat (27) on the side of said second seat (26) in said second configuration.

5. The cockpit according to claim 4, **characterized in that** said first side (98') and said second side (99') laterally delimit said first and second seat cushions (30, 31), respectively, in said first configuration and delimit said second seat cushion (31) and said first seat cushion (30), respectively, in the second configuration;
said frame (29') comprising:
- at least one guide (85') elongated along a third axis (X);
- at least one first bracket (150') defining a first seat (153') elongated along said third axis (X) and fixed to said guide (85'); and
- at least one second bracket (140'), which is spaced apart from said first bracket (150') along said third axis (X), defines a first pin (149') elongated along a fourth axis (Y) transverse to said third axis (X) and is fixed to said guide (85');
each one of said first side (98') and said second side (99') comprising, in turn:
- a first attachment element (131') comprising a second pin (135'), which can be engaged, in a sliding manner, inside said first seat (153'); and
- a second attachment element (130'), which is spaced apart from said first attachment element (131') and can be engaged by said first pin (149').

6. The cockpit according to claim 5, **characterized in that** it comprises a third side (108') and a fourth side (99'), which laterally delimit said first and second backrests (40, 41), respectively;
said frame (29') comprising, in turn:
- at least one third bracket (86') defining a second seat (84'); and
- at least one fourth bracket (93'), which is spaced apart from said third bracket (86') and defines at least one third seat (104');
each one of said third side (108') and said fourth side (109') comprising, in turn:
- a third attachment element (170'), which can be engaged, in a sliding manner, inside said third seat (84'); and
- a fourth attachment element (180'), which is spaced apart from said third attachment element (170') and can be engaged inside said at least one fourth seat (104').

7. The cockpit according to claim 6, **characterized in that** said third bracket (86') is interposed between said first backrest (40) and said third backrest (42) and **in that** it comprises a further third bracket (86') interposed between said third backrest (42) and said second backrest (41); said third brackets (86') being spaced apart from one another along said fourth axis (Y);
said fourth bracket (93') being interposed between said first backrest (40) and said third backrest (42);
said cockpit (25') further comprising a further fourth bracket (93') interposed between said third backrest (42) and said second backrest (41); said fourth brackets (93') being spaced apart from one another along said fourth axis (Y).

8. The cockpit according to any one of the preceding claims, **characterized in that** it comprises a fifth side (97, 107; 97', 107') and a sixth side (100, 110; 100', 110') fixed to the cockpit (25, 25') itself;
said first side (98, 108; 98', 108') and said fifth side (97, 107; 97', 107') laterally delimiting, on opposite sides, the corresponding first seat cushion (30, 31) or said first backrest (40, 41) and diverging from one another moving from the respective first edges (160, 160') to the corresponding second edges (161, 161') in said first configuration of said cockpit (25, 25');
said second side (99, 109; 99', 109') and said sixth side (100, 110; 100', 110') laterally delimiting, on opposite sides, the corresponding second seat cushion (30, 31) or said second backrest (40, 41) and diverging from one another moving from the respective first edges (160, 160') to the corresponding second edges (161, 161') in said first configuration of said cockpit (25, 25').

9. A motor vehicle (1) comprising:
- a passenger compartment (3);
- a plurality of driving members (10; 11, 12), which are housed inside said passenger compartment (3) and can be operated by a driver in order to control the trajectory and the speed of said motor vehicle (1);
- at least one control member (6, 7, 9, 21) connected to at least one driving member (10; 11, 12) through a drive by wire mode; and
- a cockpit (25, 25') according to any of the previous claims.

10. A method for the configuration of a cockpit (25, 25') for a motor vehicle (1);
said cockpit (25, 25') comprising:
- a frame (29, 29'), which can be fixed to said motor vehicle (1);
- a first and a second seat cushion (30, 31); and
- a first and a second backrest (40, 41);
- a first side (98, 108; 98', 108') and a second side (99, 109; 99', 109');
said method comprising the step i) of arranging said cockpit (25, 25') to a first configuration, wherein:
said first seat cushion (30), said first backrest and said first side (98, 108; 99', 108') define a first seat (26) for one of a driver and a passenger; and
said second seat cushion (31), said second backrest (41) and said second side (99, 109; 99', 109') define a second seat (27) for the other one of said driver and said passenger;
said first and second seats (26, 27) being spaced apart from one another;
said first side (98, 108; 99'; 108') delimiting said first seat (26) on the side of said second seat (27) in said first configuration;
said second side (98, 108; 99'; 108') delimiting said second seat (27) on the side of said first seat (26) in said first configuration;
said first side (98, 108; 99'; 108') and said second side (99,109; 99', 109') each comprising a respective first edge (160, 160'), which is constrained to said cockpit (25, 25'), and a respective second edge (161, 161'), which is opposite the respective first edge (160) and is free;
said first side (98, 108; 99'; 108') and said second side (99, 109; 99', 109') converging towards one another in said first configuration of said cockpit (25, 25'), moving from the respective first edges (160, 160') to the corresponding second edges (161, 161');
**characterized in that** it comprises the step ii) of shifting said cockpit (25, 25') to a second configuration, wherein a third seat cushion (32), a third backrest (42) and said first side (98, 108; 98', 108') and second side (99, 109; 99', 109') define one single third seat (28) for a driver;
said third seat cushion (32) being interposed between said first and second seat cushions (30, 31);
said third backrest (42) being at least partly interposed between said first and second backrests (40, 41);
said first side (98; 108; 99'; 108') and said second side (99; 109; 99', 109') being interposed between said first seat (30) and said third seat (32) and between said third seat (32) and said second seat (31), respectively;
said first side (98; 108; 99'; 108') and said second side (99; 109; 99', 109') diverging from one another in said second configuration of said cockpit (25, 25'), moving from the respective first edges (160, 160') to the corresponding second edges (161, 161').

11. The method according to claim 10, **characterized in that** it comprises the step iii) of rotating said first and second sides (98, 108; 99, 109) relative to the respective first and second seat cushions (30, 31) or said first and second backrests (40, 41) between a first and a second position assumed when said cockpit (25) is in said first and second configuration, respectively.

12. The method according to claim 10, **characterized in that** it comprises the steps of:
iv) connecting said first side (98', 108') and said second side (99', 109') to said frame (29) in a releasable manner;
v) placing said first side (98', 108') on a first side of said third seat (32) and said second side (99'; 109') on a second side of said third seat (32) opposite said first side, when said cockpit (25') is in said first configuration;
vi) switching said first side (98', 108') and said second side (99', 109') in order to shift said cockpit (25') from said first configuration to said second configuration.

13. The method according to claim 12, wherein said first side (98') and said second side (99') laterally delimit said first and second seat cushions (30, 31), respectively;
said method being **characterized in that** step iv) comprises the steps of:
v) inserting a first pin (135') of a first side (98') in a sliding manner into a first seat (153') elongated along a first axis (X) and defined by a first bracket (150') of said frame (29');
vi) rotating said first side (98') towards a second bracket (140') of said frame (29'), once said first pin (135') has reached a limit stop position inside said first seat (153'); said second bracket (140') being spaced apart from said first bracket (150') along said first axis (X) and comprising a second pin (149'); and
vii) coupling said second pin (149') to a hole (130') carried by said first side (98') and spaced apart from said first pin (135').

14. The method according to claim 12 or 13, **characterized in that** said cockpit (25') comprises a third side (108') and a fourth side (109'), which laterally delimit said first and second backrests (40, 41);
said method comprising the steps of:
viii) inserting a third pin (185') carried by said third side (108') in a sliding manner into a second seat (104') defined by a third bracket (94') of said frame (29');
ix) rotating said third side (108') towards a fourth bracket (86') of said frame (29'), once said third pin (185') has reached a limit stop position inside said second seat (104'); said fourth bracket (86') being spaced apart from said third bracket (94') and defining a third seat (84'); and
x) coupling an engagement element (173') carried by said third side (108') and spaced apart from said third pin (185') inside said third seat (84').

## Patentansprüche

1. Cockpit (25, 25') für ein Kraftfahrzeug (1), umfassend:
- einen Rahmen (29, 29'), der an dem Kraftfahrzeug (1) befestigt werden kann;
- ein erstes und ein zweites Sitzpolster (30, 31);
- eine erste und eine zweite Rückenlehne (40, 41) und
- eine erste Seite (98, 99; 108, 109) und eine zweite Seite (98', 99'; 108', 109'),
wobei das Cockpit (25, 25') in einer ersten Konfiguration verfügbar ist, wobei:
das erste Sitzpolster (30), die erste Rückenlehne und die erste Seite (98, 108; 99'; 108') einen ersten Sitz (26) für einen Beifahrer oder einen Fahrer definieren und
das zweite Sitzpolster (31), die zweite Rückenlehne (41) und die zweite Seite (99, 109; 99', 109') einen zweiten Sitz (27) für die andere Person, den Beifahrer oder den Fahrer, definieren;
der erste und der zweite Sitz (26, 27) voneinander beabstandet sind;
die erste Seite (98, 108; 99'; 108') in der ersten Konfiguration den ersten Sitz (26) auf der Seite des zweiten Sitzes (27) begrenzt;
die zweite Seite (98, 108; 99'; 108') in der ersten Konfiguration den zweiten Sitz (27) auf der Seite des ersten Sitzes (26) begrenzt;
die erste Seite (98, 108; 99', 108') und die zweite Seite (99, 109; 99', 109') jeweils eine jeweilige erste Kante (160, 160'), die an dem Cockpit (25, 25') fixiert ist, und eine jeweilige zweite Kante (161, 161'), die der jeweiligen ersten Kante (160, 160') gegenüberliegt und frei ist, umfassen;
die erste Seite (98, 108; 99', 108') und die zweite Seite (99, 109; 99', 109') in der ersten Konfiguration des Cockpits (25, 25') einander zulaufen und sich von den jeweiligen ersten Kanten (160, 160') zu den entsprechenden zweiten Kanten (161, 161') bewegen,
**dadurch gekennzeichnet, dass** es Folgendes umfasst:
- ein drittes Sitzpolster (32), das zwischen dem ersten und dem zweiten Sitzpolster (30, 31) eingesetzt ist;
- eine dritte Rückenlehne (42), die zumindest teilweise zwischen der ersten und zweiten Rückenlehne (40, 41) eingesetzt ist,
wobei das Cockpit (25, 25') in eine zweite Konfiguration bewegbar ist, in der das dritte Sitzpolster (32), die dritte Rückenlehne (42) sowie die erste Seite (98, 108; 99', 108') und die zweite Seite (99, 109; 99', 109') einen einzigen dritten Sitz (28) für einen Fahrer definieren,
wobei die erste Seite (98, 108; 99', 108') und die zweite Seite (99, 109; 99', 109') jeweils zwischen dem ersten Sitz (30) und dem dritten Sitz (32) und zwischen dem dritten Sitz (32) und dem zweiten Sitz (31) eingesetzt sind,
wobei die erste Seite (98, 108; 99', 108') und die zweite Seite (99, 109; 99', 109') in der zweiten Konfiguration des Cockpits (25, 25') auseinanderlaufen und sich von den jeweiligen ersten Kanten (160, 160') zu den entsprechenden zweiten Kanten (161, 161') bewegen.

2. Cockpit nach Anspruch 1, **dadurch gekennzeichnet, dass** sich die erste und zweite Seite (98, 108; 99, 109) relativ zu dem jeweiligen ersten und zweiten Sitzpolster (30, 31) drehen können oder sich die erste und zweite Rückenlehne (40, 41) zwischen einer ersten und einer zweiten Position drehen können, die eingenommen werden, wenn sich das Cockpit (25) jeweils in der ersten bzw. zweiten Konfiguration befindet.

3. Cockpit nach Anspruch 2, **dadurch gekennzeichnet, dass** sich die erste und zweite Seite (108, 109) relativ zu der jeweiligen ersten und zweiten Rückenlehne (40; 41) drehen können,
wobei sowohl die erste als auch die zweite Seite (108, 109) ihrerseits Folgendes umfassen:
- eine jeweilige erste Halbseite (108a, 109a), die sich um eine erste Achse (C, D) drehen kann, und
- eine jeweilige zweite Halbseite (108b, 109b), die sich um eine jeweilige zweite Achse (E, F) drehen kann.

4. Cockpit nach Anspruch 1, **dadurch gekennzeichnet, dass** die erste Seite (98'; 108') und die zweite Seite (99'; 109') in lösbarer Weise mit dem Rahmen (29') verbunden sind,
wobei die erste Seite (99'; 108') in der zweiten Konfiguration den zweiten Sitz (26) auf der Seite des ersten Sitzes (27) begrenzt,
wobei die zweite Seite (99'; 108') in der zweiten Konfiguration den ersten Sitz (27) auf der Seite des zweiten Sitzes (26) begrenzt.

5. Cockpit nach Anspruch 4, **dadurch gekennzeichnet, dass** die erste Seite (98') und die zweite Seite (99') in der ersten Konfiguration jeweils das erste und zweite Sitzpolster (30, 31) seitlich begrenzen und in der zweiten Konfiguration jeweils das zweite Sitzpolster (31) und das erste Sitzpolster (30) begrenzen,
wobei der Rahmen (29') Folgendes umfasst:
- mindestens eine Führung (85'), die entlang einer dritten Achse (X) langgestreckt ist;
- mindestens eine erste Halterung (150'), die einen ersten Sitz (153') definiert, der entlang der dritten Achse (X) langgestreckt an der Führung (85') befestigt ist, und
- mindestens eine zweite Halterung (140'), die von der ersten Halterung (150') entlang der dritten Achse (X) beabstandet ist und einen ersten Stift (149') definiert, der entlang einer vierten Achse (Y) quer zu der dritten Achse (X) langgestreckt und an der Führung (85') befestigt ist,
wobei sowohl die erste Seite (98') als auch die zweite Seite (99') ihrerseits Folgendes umfassen:
- ein erstes Anschlusselement (131'), das einen zweiten Stift (135') umfasst, der in gleitender Weise innerhalb des ersten Sitzes (153') in Eingriff gebracht werden kann, und
- ein zweites Anschlusselement 130'), das von dem ersten Anschlusselement (131') beabstandet ist und in das der zweite Stift (149') in Eingriff gelangen kann.

6. Cockpit nach Anspruch 5, **dadurch gekennzeichnet, dass** es eine dritte Seite (108') und eine vierte Seite (99') umfasst, die jeweils die erste und zweite Rückenlehne (40, 41) seitlich begrenzen,
wobei der Rahmen (29) seinerseits Folgendes umfasst:
- mindestens eine dritte Halterung (86'), die einen zweiten Sitz (84') definiert, und
- mindestens eine vierte Halterung (93'), die von der dritten Halterung (86') beabstandet ist und mindestens einen dritten Sitz (104') definiert,
wobei sowohl die dritte Seite (108') als auch die vierte Seite (109') ihrerseits Folgendes umfassen:
- ein drittes Anschlusselement (170'), das in gleitender Weise innerhalb des dritten Sitzes (84') in Eingriff gebracht werden kann, und
- ein viertes Anschlusselement 180'), das von dem dritten Anschlusselement (170') beabstandet ist und das innerhalb des mindestens einen vierten Sitzes (104') in Eingriff gebracht werden kann.

7. Cockpit nach Anspruch 6, **dadurch gekennzeichnet, dass** die dritte Halterung (86') zwischen der ersten Rückenlehne (40) und der dritten Rückenlehne (42) eingesetzt ist und dass es eine weitere dritte Halterung (86') umfasst, die zwischen der dritten Rückenlehne (42) und der zweiten Rückenlehne (41) eingesetzt ist, wobei die dritten Halterungen (86') entlang der vierten Achse (Y) voneinander beabstandet sind,
wobei die vierte Halterung (93') zwischen der ersten Rückenlehne (40) und der dritten Rückenlehne (42) eingesetzt ist,
wobei das Cockpit (25') ferner eine weitere vierte Halterung (93') umfasst, die zwischen der dritten Rückenlehne (42) und der zweiten Rückenlehne (41) eingesetzt ist, wobei die vierten Halterungen (93') entlang der vierten Achse (Y) voneinander beabstandet sind.

8. Cockpit nach einem der vorhergehenden Ansprüche, **dadurch gekennzeichnet, dass** es eine fünfte Seite (97, 107; 97', 107') und eine sechste Seite (100, 110; 100', 110') umfasst, die an dem Cockpit (25, 25') befestigt sind,
wobei die erste Seite (98, 108; 98', 108') und die fünfte Seite (97, 107; 97', 107') das entsprechende erste Sitzpolster (30, 31) oder die erste Rückenlehne (40, 41) auf gegenüberliegenden Seiten seitlich begrenzen sowie in der ersten Konfiguration des Cockpits (25, 25') auseinanderlaufen und sich von den jeweiligen ersten Kanten (160, 160') zu den entsprechenden zweiten Kanten (161, 161') bewegen,
wobei die zweite Seite (99, 109; 99', 109') und die vierte Seite (100, 110; 100', 110') das entsprechende zweite Sitzpolster (30, 31) oder die zweite Rückenlehne (40, 41) auf gegenüberliegenden Seiten seitlich begrenzen sowie in der ersten Konfiguration des Cockpits (25, 25') auseinanderlaufen und sich von den jeweiligen ersten Kanten (160, 160') zu den entsprechenden zweiten Kanten (161, 161') bewegen.

9. Kraftfahrzeug (1), umfassend:
- einen Insassenraum (3);
- eine Vielzahl von Antriebselementen (10; 11, 12), die im Inneren des Insassenraums (3) untergebracht sind und von einem Fahrer bedient werden können, um die Bewegungsbahn und die Geschwindigkeit des Kraftfahrzeugs (1) zu steuern;
- mindestens ein Steuerelement (6, 7, 9, 21), das mit mindestens einem Antriebselement (10; 11, 12) durch einen Drive-by-Wire-Modus verbunden ist, und
- ein Cockpit (25, 25') nach einem der vorhergehenden Ansprüche.

10. Verfahren zur Konfiguration eines Cockpits (25, 25') für ein Kraftfahrzeug (1),
wobei das Cockpit (25, 25') Folgendes umfasst:
- einen Rahmen (29, 29'), der an dem Kraftfahrzeug (1) befestigt werden kann;
- ein erstes und ein zweites Sitzpolster (30, 31) sowie
- eine erste und eine zweite Rückenlehne (40, 41);
- eine erste Seite (98, 108; 98', 108') und eine zweite Seite (99, 109; 99', 109'),
wobei das Verfahren den Schritt i) des Anordnens des Cockpits (25, 25') in eine erste Konfiguration umfasst, wobei:
das erste Sitzpolster (30), die erste Rückenlehne und die erste Seite (98; 108; 99', 108') einen ersten Sitz (26) für einen Beifahrer oder einen Fahrer definieren und
das zweite Sitzpolster (31), die zweite Rückenlehne (41) und die zweite Seite (99, 109; 99', 109') einen zweiten Sitz (27) für die andere Person, den Fahrer oder den Beifahrer, definieren;
der erste und der zweite Sitz (26, 27) voneinander beabstandet sind;
die erste Seite (98, 108; 99'; 108') in der ersten Konfiguration den ersten Sitz (26) auf der Seite des zweiten Sitzes (27) begrenzt;
die zweite Seite (98, 108; 99'; 108') in der ersten Konfiguration den zweiten Sitz (27) auf der Seite des ersten Sitzes (26) begrenzt;
die erste Seite (98, 108; 99'; 108') und die zweite Seite (99,109; 99', 109') jeweils eine jeweilige erste Kante (160, 160'), die an dem Cockpit (25, 25') fixiert ist, und eine jeweilige zweite Kante (161, 161'), die der jeweiligen ersten Kante (160') gegenüberliegt und frei ist, umfassen;
die erste Seite (98, 108; 99'; 108') und die zweite Seite (99, 109; 99', 109') in der ersten Konfiguration des Cockpits (25, 25') einander zulaufen und sich von den jeweiligen ersten Kanten (160, 160') zu den entsprechenden zweiten Kanten (161, 161') bewegen,
**dadurch gekennzeichnet, dass** es den Schritt ii) des Überführens des Cockpits (25, 25') in eine zweite Konfiguration umfasst, in der ein drittes Sitzpolster (32), eine dritte Rückenlehne (42) sowie die erste Seite (98, 108; 98', 108') und die zweite Seite (99, 109; 99', 109') einen einzigen dritten Sitz (28) für einen Fahrer definieren,
wobei das dritte Sitzpolster (32) zwischen dem ersten und dem zweiten Sitzpolster (30, 31) eingesetzt ist,
wobei die dritte Rückenlehne (42) zumindest teilweise zwischen der ersten und zweiten Rückenlehne (40, 41) eingesetzt ist,
wobei die erste Seite (98; 108'; 99'; 108') und die zweite Seite (99; 109; 99', 109') jeweils zwischen dem ersten Sitz (30) und dem dritten Sitz (32) und zwischen dem dritten Sitz (32) und dem zweiten Sitz (31) eingesetzt sind,
wobei die erste Seite (98; 108; 99'; 108') und die zweite Seite (99; 109; 99', 109') in der zweiten Konfiguration des Cockpits (25, 25') auseinanderlaufen und sich von den jeweiligen ersten Kanten (160, 160') zu den entsprechenden zweiten Kanten (161, 161') bewegen.

11. Verfahren nach Anspruch 10, **dadurch gekennzeichnet, dass** es den Schritt iii) des Drehens der ersten und zweiten Seite (98, 108; 99, 109) relativ zu dem jeweiligen ersten und zweiten Sitzpolster (30, 31) oder der ersten und zweiten Rückenlehne (40, 41) zwischen einer ersten Position und einer zweiten Position, die eingenommen werden, wenn sich das Cockpit (25) jeweils in der ersten bzw. zweiten Konfiguration befindet, umfasst.

12. Verfahren nach Anspruch 10, **dadurch gekennzeichnet, dass** es die folgenden Schritte umfasst:
iv) Verbinden der ersten Seite (98', 108') und der zweiten Seite (99', 109') in lösbarer Weise mit dem Rahmen (29);
v) Platzieren der ersten Seite (98', 108') auf einer ersten Seite des dritten Sitzes (32) und der zweiten Seite (99'; 109') auf einer zweiten Seite des dritten Sitzes (32) gegenüber der ersten Seite, wenn sich das Cockpit (25') in der ersten Konfiguration befindet;
vi) Wechseln der ersten Seite (98', 108') und der zweiten Seite (99', 109'), um das Cockpit (25') von der ersten Konfiguration in die zweite Konfiguration zu überführen.

13. Verfahren nach Anspruch 12, wobei die erste Seite (98') und die zweite Seite (99') jeweils das erste bzw. zweite Sitzpolster (30, 31) seitlich begrenzen,
wobei das Verfahren **dadurch gekennzeichnet ist, dass** Schritt iv) die folgenden Schritte umfasst:
v) Einfügen eines ersten Stifts (135') einer ersten Seite (98') in gleitender Weise in einen ersten Sitz (153'), der entlang einer ersten Achse (X) langgestreckt und durch eine erste Halterung (150') des Rahmens (29') definiert ist;
vi) Drehen der ersten Seite (98') in Richtung einer zweiten Halterung (140') des Rahmens (29'), sobald der erste Stift (135') eine Endanschlagsposition innerhalb des ersten Sitzes (153') erreicht hat, wobei die zweite Halterung (140') von der ersten Halterung (150') entlang der ersten Achse (X) beabstandet ist und einen zweiten Stift (149') aufweist, und
vii) Koppeln des zweiten Stifts (149') mit einem Loch (130'), das von der ersten Seite (98') getragen wird und von dem ersten Stift (135') beabstandet ist.

14. Verfahren nach Anspruch 12 oder 13, **dadurch gekennzeichnet, dass** das Cockpit (25') eine dritte Seite (108') und eine vierte Seite (109') umfasst, die jeweils die erste und zweite Rückenlehne (40, 41) seitlich begrenzen,
wobei das Verfahren die folgenden Schritte umfasst:
viii) Einfügen eines dritten Stifts (185'), der von der dritten Seite (108') getragen wird, in gleitender Weise in einen zweiten Sitz (104'), der durch eine dritte Halterung (94') des Rahmens (29') definiert ist;
ix) Drehen der dritten Seite (108') in Richtung einer vierten Halterung (86') des Rahmens (29'), sobald der dritte Stift (185') eine Endanschlagsposition innerhalb des zweiten Sitzes (104') erreicht hat, wobei die vierte Halterung (86') von der dritten Halterung (94') beabstandet ist und einen dritten Sitz (84') definiert, und
x) Koppeln eines Eingriffselements (173'), das von der dritten Seite (108') getragen wird und von dem dritten Stift (185') beabstandet ist, innerhalb des dritten Sitzes (84').

## Revendications

1. Poste de conduite (25, 25') pour un véhicule automobile (1), comprenant :
- un châssis (29, 29') qui peut être fixé audit véhicule automobile (1) ;
- un premier et un deuxième coussin de siège (30, 31) ;
- un premier et un deuxième dossier (40, 41) ; et
- un premier côté (98, 99 ; 108, 109) et un deuxième côté (98', 99' ; 108', 109') ;
ledit poste de conduite (25, 25') étant disponible dans une première configuration, dans lequel :
ledit premier coussin de siège (30), ledit premier dossier et ledit premier côté (98, 108 ; 99' ; 108') définissent un premier siège (26) pour l'un parmi un passager et un conducteur ; et
ledit deuxième coussin de siège (31), ledit deuxième dossier (41) et ledit deuxième côté (99, 109 ; 99', 109') définissent un deuxième siège (27) pour l'autre parmi ledit passager et ledit conducteur ;
lesdits premier et deuxième sièges (26, 27) sont espacés l'un de l'autre ;
ledit premier côté (98, 108 ; 99' ; 108') délimitant ledit premier siège (26) du côté dudit deuxième siège (27) dans ladite première configuration ;
ledit deuxième côté (98, 108 ; 99' ; 108') délimitant ledit deuxième siège (27) du côté dudit premier siège (26) dans ladite première configuration ;
ledit premier côté (98, 108 ; 99', 108') et ledit deuxième côté (99, 109 ; 99', 109') comprenant chacun un premier bord respectif (160, 160'), qui est contraint audit poste de conduite (25, 25'), et un deuxième bord respectif (161, 161'), qui est opposé au premier bord respectif (160, 160') et qui est libre ;
ledit premier côté (98, 108 ; 99', 108') et ledit deuxième côté (99, 109 ; 99', 109') convergeant l'un vers l'autre dans ladite première configuration dudit poste de conduite (25, 25'), en se déplaçant des premiers bords respectifs (160, 160') vers les deuxièmes bords correspondants (161, 161') ;
**caractérisé en ce qu'**il comprend :
- un troisième coussin de siège (32) interposé entre lesdits premier et deuxième coussins de siège (30, 31) ;
- un troisième dossier (42) au moins partiellement interposé entre lesdits premier et deuxième dossiers (40, 41) ;
ledit poste de conduite (25, 25') peut être déplacé vers une deuxième configuration, dans lequel ledit troisième coussin de siège (32), ledit troisième dossier (42) et lesdits premier (98, 108 ; 99', 108') et deuxième (99, 109 ; 99', 109') côtés définissent un seul et unique troisième siège (28) pour un conducteur ;
ledit premier côté (98, 108 ; 99', 108') et ledit deuxième côté (99, 109 ; 99', 109') étant interposés respectivement entre ledit premier siège (30) et ledit troisième siège (32) et entre ledit troisième siège (32) et ledit deuxième siège (31) ;
ledit premier côté (98, 108 ; 99', 108') et ledit deuxième côté (99, 109 ; 99', 109') s'écartant l'un de l'autre dans ladite deuxième configuration dudit poste de conduite (25, 25'), en se déplaçant des premiers bords respectifs (160, 160') vers les deuxièmes bords correspondants (161, 161').

2. Poste de conduite selon la revendication 1, **caractérisé en ce que** lesdits premier et deuxième côtés (98, 108 ; 99, 109) peuvent pivoter par rapport aux premier et deuxième coussins de siège respectifs (30, 31) ou lesdits premier et deuxième dossiers (40, 41) peuvent pivoter entre une première et une deuxième position supposée lorsque ledit poste de conduite (25) est dans ladite première et ladite deuxième configuration, respectivement.

3. Poste de conduite selon la revendication 2, **caractérisé en ce que** lesdits premier et deuxième côtés (108, 109) peuvent pivoter par rapport aux premier et deuxième dossiers (40, 41) ;
chacun desdits premier et deuxième côtés (108, 109) comprenant, à son tour :
- un premier demi-côté respectif (108a, 109a), qui peut pivoter autour d'un premier axe (C, D) ; et
- un deuxième demi-côté respectif (108b, 109b), qui peut pivoter autour d'un deuxième axe respectif (E, F).

4. Poste de conduite selon la revendication 1, **caractérisé en ce que** ledit premier côté (98' ; 108') et ledit deuxième côté (99' ; 109') sont reliés audit châssis (29') de manière amovible ;
ledit premier côté (99' ; 108') délimitant ledit deuxième siège (26) du côté dudit premier siège (27) dans ladite deuxième configuration ;
ledit deuxième côté (99' ; 108') délimitant ledit premier siège (27) du côté dudit deuxième siège (26) dans ladite deuxième configuration.

5. Poste de conduite selon la revendication 4, **caractérisé en ce que** ledit premier côté (98') et ledit deuxième côté (99') délimitent latéralement lesdits premier et deuxième coussins de siège (30, 31), respectivement, dans ladite première configuration et délimitent ledit deuxième coussin de siège (31) et ledit premier coussin de siège (30), respectivement, dans la deuxième configuration ;
ledit châssis (29') comprenant :
- au moins un guide (85') allongé le long d'un troisième axe (X) ;
- au moins un premier support (150') définissant un premier siège (153') allongé le long dudit troisième axe (X) et fixé audit guide (85') ; et
- au moins un deuxième support (140'), qui est espacé dudit premier support (150') le long dudit troisième axe (X), définit une première goupille (149') allongée le long d'un quatrième axe (Y) transversal audit troisième axe (X) et est fixé audit guide (85') ;
chacune de ladite première face (98') et de ladite deuxième face (99') comprenant, à son tour :
- un premier élément de fixation (131') comprenant une deuxième goupille (135'), qui peut être engagée, de manière coulissante, à l'intérieur dudit premier siège (153') ; et
- un deuxième élément de fixation (130'), qui est espacé dudit premier élément de fixation (131') et peut être engagé par ladite première goupille (149').

6. Poste de conduite selon la revendication 5, **caractérisé en ce qu'**il comprend un troisième côté (108') et un quatrième côté (99'), qui délimitent latéralement lesdits premier et deuxième dossiers (40, 41), respectivement ;
ledit châssis (29) comprenant, à son tour :
- au moins un troisième support (86') définissant un deuxième siège (84') ; et
- au moins un quatrième support (93'), qui est espacé dudit troisième support (86') et définit au moins un troisième siège (104') ;
chacun dudit troisième côté (108') et dudit quatrième côté (109') comprenant, à son tour :
- un troisième élément de fixation (170'), qui peut être engagé, de manière coulissante, à l'intérieur dudit troisième siège (84') ; et
- un quatrième élément de fixation (180'), qui est espacé dudit troisième élément de fixation (170') et peut être engagé à l'intérieur dudit au moins un quatrième siège (104').

7. Poste de conduite selon la revendication 6, **caractérisé en ce que** ledit troisième support (86') est interposé entre ledit premier dossier (40) et ledit troisième dossier (42) et **en ce qu'**il comprend un autre troisième support (86') interposé entre ledit troisième dossier (42) et ledit deuxième dossier (41) ; lesdits troisièmes supports (86') étant espacés les uns des autres le long dudit quatrième axe (Y) ;
ledit quatrième support (93') est interposé entre ledit premier dossier (40) et ledit troisième dossier (42) ;
ledit poste de conduite (25') comprenant en outre un quatrième support (93') interposé entre ledit troisième dossier (42) et ledit deuxième dossier (41) ; lesdits quatrièmes supports (93') sont espacés les uns des autres le long dudit quatrième axe (Y).

8. Poste de conduite selon l'une quelconque des revendications précédentes, **caractérisé en ce qu'**il comprend un cinquième côté (97, 107 ; 97', 107') et un sixième côté (100, 110 ; 100', 110') fixés au poste de conduite (25, 25') lui-même ;
ledit premier côté (98, 108 ; 98', 108') et ledit cinquième côté (97, 107 ; 97', 107') délimitant latéralement, sur des côtés opposés, le premier coussin de siège correspondant (30, 31) ou ledit premier dossier (40, 41) et s'écartant l'un de l'autre en passant des premiers bords respectifs (160, 160') aux deuxièmes bords correspondants (161, 161') dans ladite première configuration dudit poste de conduite (25, 25') ;
ledit deuxième côté (99, 109 ; 99', 109') et ledit sixième côté (100, 110 ; 100', 110') délimitant latéralement, sur des côtés opposés, le deuxième coussin de siège correspondant (30, 31) ou ledit deuxième dossier (40, 41) et s'écartant l'un de l'autre en passant des premiers bords respectifs (160, 160') aux deuxièmes bords correspondants (161, 161') dans ladite première configuration dudit poste de conduite (25, 25').

9. Véhicule automobile (1) comprenant :
- un habitacle (3) ;
- une pluralité d'éléments de conduite (10 ; 11, 12), qui sont logés à l'intérieur dudit habitacle (3) et peuvent être actionnés par un conducteur afin de contrôler la trajectoire et la vitesse dudit véhicule à moteur (1) ;
- au moins un élément de commande (6, 7, 9, 21) relié à au moins un élément de conduite (10 ; 11, 12) par un mode de conduite par fil ; et
- un poste de conduite (25, 25') selon l'une quelconque des revendications précédentes.

10. Procédé de configuration d'un poste de conduite (25, 25') pour un véhicule automobile (1) ;
ledit poste de conduite (25, 25') comprenant :
- un châssis (29, 29') qui peut être fixé audit véhicule automobile (1) ;
- un premier et un deuxième coussin de siège (30, 31) ; et
- un premier et un deuxième dossier (40, 41) ;
- un premier côté (98, 108 ; 98', 108') et un deuxième côté (99, 109 ; 99', 109') ;
ledit procédé comprenant l'étape i) d'agencement dudit poste de conduite (25, 25') dans une première configuration, dans lequel :
ledit premier coussin de siège (30), ledit premier dossier et ledit premier côté (98, 108 ; 99', 108') définissent un premier siège (26) pour l'un parmi un conducteur et un passager ; et
ledit deuxième coussin de siège (31), ledit deuxième dossier (41) et ledit deuxième côté (99, 109 ; 99', 109') définissent un deuxième siège (27) pour l'autre parmi ledit conducteur et ledit passager ;
lesdits premier et deuxième sièges (26, 27) sont espacés l'un de l'autre ;
ledit premier côté (98, 108 ; 99' ; 108') délimitant ledit premier siège (26) du côté dudit deuxième siège (27) dans ladite première configuration ;
ledit deuxième côté (98, 108 ; 99' ; 108') délimitant ledit deuxième siège (27) du côté dudit premier siège (26) dans ladite première configuration ;
ledit premier côté (98, 108 ; 99', 108') et ledit deuxième côté (99,109 ; 99', 109') comprenant chacun un premier bord respectif (160, 160'), qui est contraint audit poste de conduite (25, 25'), et un deuxième bord respectif (161, 161'), qui est opposé au premier bord respectif (160) et qui est libre ;
ledit premier côté (98, 108 ; 99' ; 108') et ledit deuxième côté (99, 109 ; 99', 109') convergeant l'un vers l'autre dans ladite première configuration dudit poste de conduite (25, 25'), en passant des premiers bords respectifs (160, 160') aux deuxièmes bords correspondants (161, 161') ;
**caractérisé en ce qu'**il comprend l'étape ii) de déplacement dudit poste de conduite (25, 25') dans une deuxième configuration, dans lequel un troisième coussin de siège (32), un troisième dossier (42) et ledit premier côté (98, 108 ; 98', 108') et ledit deuxième côté (99, 109 ; 99', 109') définissent un seul et unique troisième siège (28) pour un conducteur ;
ledit troisième coussin de siège (32) est interposé entre lesdits premier et deuxième coussins de siège (30, 31) ;
ledit troisième dossier (42) est au moins partiellement interposé entre lesdits premier et deuxième dossiers (40, 41) ;
ledit premier côté (98 ; 108 ; 99' ; 108') et ledit deuxième côté (99 ; 109 ; 99', 109') étant interposés respectivement entre ledit premier siège (30) et ledit troisième siège (32) et entre ledit troisième siège (32) et ledit deuxième siège (31) ;
ledit premier côté (98 ; 108 ; 99' ; 108') et ledit deuxième côté (99 ; 109 ; 99', 109') s'écartant l'un de l'autre dans ladite deuxième configuration dudit poste de conduite (99'), en se déplaçant des premiers bords respectifs (160, 160') vers les deuxièmes bords correspondants (161, 161').

11. Procédé selon la revendication 10, **caractérisé en ce qu'**il comprend l'étape iii) de rotation desdits premier et deuxième côtés (98, 108 ; 99, 109) par rapport aux premier et deuxième coussins de siège respectifs (30, 31) ou auxdits premier et deuxième dossiers (40, 41) entre une première et une deuxième position prises lorsque ledit poste de conduite (25) se trouve, respectivement, dans ladite première et ladite deuxième configurations.

12. Procédé selon la revendication 10 ou 12, **caractérisé en ce qu'**il comprend les étapes suivantes :
iv) le raccordement dudit premier côté (98', 108') et dudit deuxième côté (99', 109') audit châssis (29) de manière amovible ;
v) le placement dudit premier côté (98', 108') sur un premier côté dudit troisième siège (32) et dudit deuxième côté (99' ; 109') sur un deuxième côté dudit troisième siège (32) opposé audit premier côté, lorsque ledit poste de conduite (25') se trouve dans ladite première configuration ;
vi) la commutation dudit premier côté (98', 108') et dudit deuxième côté (99', 109') afin de faire passer ledit poste de conduite (25') de ladite première configuration à ladite deuxième configuration.

13. Procédé selon la revendication 12, dans lequel ledit premier côté (98') et ledit deuxième côté (99') délimitent latéralement lesdits premier et deuxième coussins de siège (30, 31), respectivement ;
ledit procédé étant **caractérisé en ce que** l'étape iv) comprend les étapes suivantes :
v) l'insertion d'une première goupille (135') d'un premier côté (98') de manière coulissante dans un premier siège (153') allongé le long d'un premier axe (X) et défini par un premier support (150') dudit châssis (29') ;
vi) la rotation dudit premier côté (98') vers un deuxième support (140') dudit châssis (29'), une fois que ladite première goupille (135') a atteint une position de butée à l'intérieur dudit premier siège (153') ; ledit deuxième support (140') est espacé dudit premier support (150') le long dudit premier axe (X) et comprend une deuxième goupille (149') ; et
vii) l'accouplement de ladite deuxième goupille (149') à un trou (130') porté par ledit premier côté (98') et espacé de ladite première goupille (135').

14. Procédé selon la revendication 12 ou 13, **caractérisé en ce que** ledit poste de conduite (25') comprend un troisième côté (108') et un quatrième côté (109'), qui délimitent latéralement lesdits premier et deuxième dossiers (40, 41) ;
ledit procédé comprenant les étapes suivantes :
viii) l'insertion d'une troisième goupille (185') portée par ledit troisième côté (108') de manière coulissante dans un deuxième siège (104') défini par un troisième support (94') dudit châssis (29') ;
ix) la rotation dudit troisième côté (108') vers un quatrième support (86') dudit châssis (29'), une fois que ladite troisième goupille (185') a atteint une position de butée à l'intérieur dudit deuxième siège (104') ; ledit quatrième support (86') étant espacé dudit troisième support (94') et définissant un troisième siège (84') ; et
x) l'accouplement d'un élément d'engagement (173') porté par ledit troisième côté (108') et espacé de ladite troisième goupille (185') à l'intérieur dudit troisième siège (84').
